**Europäisches Patentamt**

**European Patent Office**

**Office européen des brevets**

(19)

(11) Veröffentlichungsnummer: **0 220 620 B1**

## EUROPÄISCHE PATENTSCHRIFT

(12)

(45) Veröffentlichungstag der Patentschrift: **25.09.91**

(51) Int. Cl.⁵: **B32B 27/32**

(21) Anmeldenummer: **86114371.7**

(22) Anmeldetag: **17.10.86**

(54) **Biaxial orientierte, koextrudierte Mehrschichtfolie.**

(30) Priorität: **26.10.85 DE 3538100**

(43) Veröffentlichungstag der Anmeldung:
**06.05.87 Patentblatt 87/19**

(45) Bekanntmachung des Hinweises auf die
Patenterteilung:
**25.09.91 Patentblatt 91/39**

(84) Benannte Vertragsstaaten:
**BE DE FR GB IT NL**

(56) Entgegenhaltungen:
**DE-A- 2 402 120**
**DE-A- 3 444 158**
**DE-A- 3 509 384**
**GB-A- 1 453 621**

(73) Patentinhaber: **HOECHST AKTIENGESELL-
SCHAFT
Postfach 80 03 20
W-6230 Frankfurt am Main 80(DE)**

(72) Erfinder: **Crass, Günther, Dipl.-Ing.
Bachstrasse 7
W-6204 Taunusstein-Wehen(DE)**
Erfinder: **Dallmann, Hermann, Dr. Dipl.-Chem.
Erbsenacker 29
W-6200 Wiesbaden-Naurod(DE)**
Erfinder: **Bothe, Lothar, Dr. Dipl.-Chem.
Am Heiligenhaus 9
W-6500 Mainz(DE)**

EP 0 220 620 B1

## Beschreibung

Die Erfindung betrifft eine biaxial orientierte, koextrudierte Mehrschichtfolie, mit einer Polypropylenschicht als Basisschicht, auf die ein- oder beidseitig Deckschichten aufgebracht sind.

Für Verpackungszwecke wurden in der Vergangenheit überwiegend zellglas-Folien, wie beispielsweise Cellophan[R], verwendet, die jedoch durch die Fortentwicklung des Standes der Technik heutzutage überwiegend durch Kunststoffolien aus Polyethylen, Polyvinylchlorid, Polypropylen u.dgl. Kunststoffe ersetzt wurden.

Besondere Bedeutung haben hierbei die biaxial orientierten Polypropylenfolien erlangt, da diese durch Modifizierung der Rezeptur, des Schichtaufbaus durch entsprechende Wahl der Parameter bei der Koextrusion von Mehrfachschichten und der Auswahl unterschiedlicher Beschichtungen wie Acrylat, PVDC für nahezu alle Verpackungsanforderungen hergestellt werden können.

Zum Einsatz kommen diese Folien bis auf wenige Ausnahmen, wie beispielsweise als Verpackungsmaterial für Zigarettenschachteln, in bedruckter Form.

Bekannterweise ist Polypropylen unpolar und lassen sich Polypropylenfolien, bedingt durch ihre niedrige Oberflächenspannung, nahezu nicht bedrucken. Zur Verbesserung der Benetzungsfähigkeit und der Haftung beim Bedrucken und Kaschieren werden Polypropylenfolien üblicherweise einer Koronaentladung unterzogen, wodurch sich die Oberflächenspannung von etwa 30 mN/m auf Werte zwischen 36 und 42 mN/m erhöht und die Folien bedruckbar werden.

Die Wirkung dieser Vorbehandlung der Folien durch Koronaentladung klingt mit der Zeit ab und die Oberflächenspannung erreicht nahezu unabhängig von ihrem Ausgangswert eine Größenordnung von etwa kleiner/gleich 35 mN/m. Sobald diese Größenordnung erreicht ist, wird die Folie nahezu wieder nicht bedruckbar. Mit anderen Worten bedeutet dies, daß Polypropylenfolien trotz der Vorbehandlung mittels einer Koronaentladung nur eine begrenzte Zeit bedruckbar bleiben.

Neben diesem Nachteil der nur kurzzeitigen Bedruckbarkeit von Polypropylenfolien besteht der weitaus gravierendere Nachteil der Koronaentladung darin, daß es zu einer drastischen Verschlechterung der Geruchsqualität der Folie kommt, wobei diese Verschlechterung von der Intensität der Koronaentladung abhängt. So wird die sensorisch nahezu indifferente Polypropylenfolie durch Koronaentladung in ihrer Geruchsqualität derart verschlechtert, daß sie für viele Anwendungszwecke, bei denen das Füllgut in direkten Kontakt mit der Folie kommt, nicht mehr geeignet ist.

Aufgabe der Erfindung ist es, für die Verpakkung von Lebensmitteln, Füllgut u.dgl. eine Polypropylenfolie zur Verfügung zu stellen, die über eine lange Zeitspanne bedruckbar ist, ohne daß es zu einer Verschlechterung der Geruchsqualität der Folie kommt.

Diese Aufgabe wird erfindungsgemäß dadurch gelöst, daß zumindest eine Deckschicht ein Kopolyester in Form von Polykondensaten aus Terephthalsäure, Isophthalsäure und Ethylenglykol oder Butandiol ist, eine Oberflächenspannung größer/gleich 36 mN/m besitzt und ohne Vorbehandlung durch eine Koronaentladung bedruckbar und siegelfähig ist.

Desweiteren ist es möglich, daß beide Deckschichten Kopolyester in Form von Polykondensaten aus Terephthalsäure, Isophthalsäure und Ethylenglykol oder Butandiol sind. Es kann auch die eine Deckschicht ein Kopolyester und die andere Deckschicht ein polyolefinischer Siegelrohstoff aus $C_2$-, $C_2C_3$-, $C_2C_4$-, $C_3C_4$-, $C_2C_3C_4$-Rohstoffen oder Mischungen dieser Rohstoffe sein. Die Basisschicht besteht zweckmäßigerweise aus einem reinen PolypropylenHomopolymer, ausgerüstet mit Additiven wie Antistatika, Gleitmitteln, Stabilisatoren, Nukleierungsmitteln, Neutralisationsmitteln und/oder Antiblockmitteln.

Zur Reduzierung der Strecktemperatur der biaxial orientierten, koextrudierten Mehrschicht-Propylenfolie sind üblicherweise der Basisschicht 10 - 30 Gew. -% Kohlenwasserstoffharz, bezogen auf das Gewicht der Basisschicht, zugesetzt.

Die Gesamtdicke der Mehrschichtfolie beträgt im allgemeinen 15 bis 60 $\mu$m, insbesondere 20 bis 40 $\mu$m, wobei die Dicken der Deckschichten 0,2 bis 2 $\mu$m, insbesondere 0,5 bis 1,5 $\mu$m betragen. Die Oberflächenspannung der Folie bewegt sich im Bereich von 36 bis 42 mN/m.

Die Mehrschichtverbundfolie nach der Erfindung wird insbesondere als siegel-, bedruckbare und geruchlose Verpackungsfolie verwendet.

Wie schon voranstehend erwähnt wurde, sind die Kopolyester der Deckschichten thermoplastische Polykondensationsprodukte aus zwei oder mehreren mehrbasischen aliphatischen oder aromatischen Karbonsäuren und zweiwertigen Alkoholen.

Sie können sowohl durch direkte Veresterung der Karbonsäuren und Alkohole als auch nach dem Umesterungsverfahren unter Verwendung der üblichen Katalysatoren wie Ca-, Li-, Zn- oder Mn-Salzen und Stabilisatoren wie Phosphorverbindungen hergestellt werden.

Beispiele für Kopolyester sind Polykondensate aus Terephthalsäure, Isophthalsäure und Ethylenglykol oder Butandiol. Anstelle der Isophthalsäure können auch Adipinsäure, Acaleinsäure oder Sebacinsäure als Komponenten verwendet werden.

Die mehrbasischen Karbonsäuren können zur Verbesserung der Haftung von Beschichtungen noch funktionelle Gruppen enthalten.

Beispiele für derartige Karbonsäuren sind die p-Hydroxybenzoesäure, das 5-Natriumsulfoisophthalat oder die Trimelitsäure.

Die Kombination der verschiedenen Polyester kann auch in Form einer Blockkondensation erfolgen.

Das Verhältnis der eingesetzten Säuren kann im Bereich von 90:10 - 10:90 Mol-% variiert werden. Der Schmelzpunkt des Polykondensats und das Kristallisationsverhalten kann hierdurch den Anforderungen entsprechend eingestellt werden.

Anstelle eines Kopolyesters können auch Mischungen verschiedener Kopolyester eingesetzt werden. Weiterhin können die Kopolyester in Form von Blends mit anderen Polymeren verwendet werden.

Beispiele für die Polymeren, die in den Kopolyester eingemischt werden können, sind Polyolefin-Homo- und Kopolymere wie Polyethylen, Polypropylen, Poly-4-methylpenten, Ethylen-Vinylacetat-Kopolymere oder deren Verseifungsprodukte, Ionomere, Polyamide u.a. Die Art und Menge der zugesetzten Polymeren richtet sich nach den an die Folie gestellten Anforderungen.

Die Kopolyesterschichten können zur Optimierung der Schlupf- und Gleiteigenschaften inerte organische oder anorganische Partikel, Wachse oder Siloxane sowie weiter übliche Zusätze wie Antistatika, Antioxidantien u.a. enthalten.

Das Zusammenführen der Polypropylenfolie und der Deckschichten aus Kopolyester erfolgt mittels Koextrusion, wobei sogenannte Koextrusionsmehrschichtdüsen eingesetzt werden, die das Einstellen und Aufeinanderabstimmen der Fließgeschwindigkeiten der einzelnen Schichten der Mehrschichtverbundfolie mit großer Genauigkeit ermöglichen. Vom Einsatz der Adaptertechnologie bei der Herstellung der Mehrschichtfolie wird im allgemeinen abgesehen, da sich die Abstimmung der Fließgeschwindigkeiten der unterschiedlichen Rohstoffe sehr schwierig gestaltet.

Die durch Koextrusion hergestellte ein- oder beidseitig beschichtete und nacheinander in Längsrichtung bei einer Temperatur von 120 - 130 °C und in Querrichtung bei einer Temperatur von 160 - 170 °C gestreckte Folie wird zuletzt thermofixiert. Diese Wärmebehandlung wird in an sich bekannter Weise vorgenommen, nämlich bei einer Temperatur von vorzugsweise 150 - 160 °C über eine Zeitspanne von etwa 0,5 bis 10 sec. Durch den Einsatz von siegelfähigen Kopolyestern werden als Ergebnis ein- oder beidseitig siegelfähige und bedruckbare Folien erhalten. Die Siegelschichten können gleichfalls bekannte Additive, insbesondere Dimethylpolysiloxan enthalten.

In einer anderen Ausführungsform der Erfindung weist die Folie einen Dreischicht-Aufbau mit beidseitig unterschiedlichen Deckschichten auf. Während sich auf der bedruckbaren Seite als Deckschicht eine Kopolyesterschicht befindet, ist die gegenüberliegende Oberfläche der Basisschicht mit einem polyolefinischen Siegelrohstoff beschichtet. Hierfür können $C_2$-, $C_2C_3$-, $C_2C_4$-, $C_3C_4$-, $C_2C_3C_4$- Rohstoffe und Mischungen aus diesen Rohstoffen verwendet werden, dabei versteht man unter

| | | |
|---|---|---|
| $C_2$ = | Polyäthylen | |
| $C_2C_3$ = | ein statistisches Kopolymer aus Ethylen- und Propylen-Einheiten | |
| $C_3C_4$ = | ein statistisches Kopolymer aus Propylen- und Buten-Einheiten | |
| $C_2C_4$ = | ein statistisches Kopolymer aus Ethylen- und Buten-Einheiten | |
| $C_2C_3C_4$ = | ein statistisches Perpolymer aus Ethylen-, Propylen- und Buten-Einheiten. | |

Die Rezepturen für diese Rohstoffe sind beispielsweise in den deutschen Offenlegungsschriften 32 47 998, 34 44 158 und 35 09 384 beschrieben.

Wegen der gegenüber Polypropylen unterschiedlichen Kristallisationskinetik der verwendeten Kopolyester ist es zweckmäßig, die biaxiale Streckung der Mehrschichtfolie in einem Simultanrahmen durchzuführen, bei dem ein Kontakt mit heißen Walzen vermieden wird. Erfolgt die biaxiale Streckung als Folgestreckung in der Weise, daß zuerst in Längsrichtung und anschliessend in Querrichtung oder zuerst in Querrichtung und dann in Längsrichtung gestreckt wird, wobei die Längs-Streckung mittels Walzen mit unterschiedlichen Umlaufgeschwindigkeiten und die Querstreckung im Kluppenrahmen erfolgt, müssen zur Reduzierung der Strecktemperaturen der Polypropylen-Basisschicht 10 - 30 % Kohlenwasserstoffharze zugesetzt werden. Wesentlich ist, daß die beiden Streckungen nacheinander und bei vorgegegebenen Temperaturen und Streckverhältnissen vorgenommen werden. Die Koextrusion der die Basisschicht bildenden Polypropylenschicht und der die Deckschichten bildenden Kopolyester bzw. polyolefinischen Siegelrohstoffe mittels einer Koextrusionsdüse, das Abkühlen der koextrudierten Folie zu ihrer Verfestigung, das Wiedererhitzen der Folie auf die Strecktemperatur und die Längs- und Querstreckung werden in an sich bekannter Weise durchgeführt (vgl. deutsche Auslegeschrift 28 14 311). Das Abkühlen der Mehrschichtfolie zwecks Verfestigung und ihr Wiedererhitzen auf Strecktemperatur wird mit Hilfe einer oder mehrerer Walzen vorgenommen, die auf einer entsprechenden Temperatur gehalten werden. Die Längsstreckung der Folie erfolgt mit Hilfe zweier entsprechend dem angestrebten Streckverhältnis verschieden schnell laufenden Walzenpaare und ihre Querstreckung mit Hilfe eines entsprechenden Kluppenrahmens. Es ist zweckmäßig, die Folie nach der ersten Streckung abzukühlen und auf dem Weg zur zweiten Streckung wieder auf die erforderliche Strecktemperatur zu bringen.

Im folgenden sind drei Beispiele für die Mehrschichtfolie aus Polypropylen und siegelfähigen Deckschichten sowie zwei Vergleichsbeispiele näher beschrieben.

## Beispiel 1

Es wurde eine Basisschicht aus Polypropylen mit beidseitig aufgebrachten siegelfähigen Deckschichten aus Kopolyester durch eine Flachdüse koextrudiert. Die Dicke der Deckschichten beträgt jeweils 1 $\mu$m, die Dicke der Mehrschichtverbundfolie 25 $\mu$m, die Oberflächenspannung 42 mN/m und die Siegeltemperatur 135 °C. Die erhaltene Folie ist ohne Vorbehandlung durch eine Koronaentladung sehr gut bedruckbar über längere Zeit und geruchsneutral.

## Beispiel 2

Die Basisschicht aus Polypropylen auf der einen Seite mit einer Deckschicht aus Kopolyester mit einer Dicke von 1 $\mu$m und auf der anderen Seite mit einer Schicht aus siegelfähigem $C_2C_3$-Rohstoff wurde durch eine Flachdüse koextrudiert. Die erhaltene Mehrschichtfolie ist ebenfalls ohne Vorbehandlung gut bedruckbar und geruchsneutral. Die Siegeltemperatur beträgt auf der Seite der Deckschicht aus dem $C_2C_3$-Rohstoff rund 120 °C.

## Beispiel 3

Es wird eine Basisschicht aus Polypropylen auf der einen Seite mit einer Deckschicht aus Kopolyester und auf der anderen Seite mit einer Deckschicht aus einem siegelfähigen Kopolymeren aus Propylen- und Ethylen-oder Buten-(1)-Einheiten und/oder einem Terpolymeren aus Ethylen-, Propylen- und Buten-(1)-Einheiten koextrudiert. Der siegelfähigen Deckschicht können noch zusätzliche 5 - 15 Gew.-% eines niedrigmolekularen, mit der Olefinharz-Zusammensetzung der siegelfähigen Deckschicht verträglichen Harzes und/oder 5 - 50 Gew.-% eines Polypropylen-Homo-Polymeren, jeweils bezogen auf die siegelbare Deckschicht, zugesetzt werden. Weitere Einzelheiten der siegelfähigen Deckschicht sind in der DE-A 34 44 158 beschrieben.

Die erhaltene Mehrschichtfolie ist bedruckbar und geruchsneutral, ihre Siegeltemperatur beträgt 100 °C.

## Vergleichsbeispiel 1

Die Basisschicht ist eine Polypropylenschicht, während die beiden Deckschichten siegelfähige $C_2C_3$-Rohstoff-Schichten sind. Diese koextrudierte Mehrschichtfolie wird einer Koronaentladung ausgesetzt, wodurch sich eine gute Bedruckbarkeit der Mehrschichtfolie im frischen Zustand ergibt, die jedoch mit einer starken Geruchsbeeinträchtigung einhergeht.

Die Bedruckbarkeit läßt in Abhängigkeit von den jeweiligen Lagerungsbedingungen der Folie innerhalb einer Zeitspanne von sechs bis acht Monaten nach.

## Vergleichsbeispiel 2

Es wird die gleiche Mehrschichtfolie wie in Vergleichsbeispiel 1 verwendet, jedoch nicht durch eine Koronaentladung vorbehandelt. Die Folie ist geruchsneutral, aber nicht bedruckbar.

## Patentansprüche

1. Biaxial orientierte, koextrudierte Mehrschichtfolie, mit einer Polypropylenschicht als Basisschicht, auf die einoder beidseitig Deckschichten aufgebracht sind, dadurch gekennzeichnet, daß zumindest eine Deckschicht ein Kopolyester in Form von Polykondensaten aus Terephthalsäure, Isophthalsäure und Ethylenglykol oder Butandiol ist, eine Oberflächenspannung größer/gleich 36 mN/m besitzt und ohne Vorbehandlung durch eine Koronaentladung bedruckbar und siegelfähig ist.

2. Mehrschichtfolie nach Anspruch 1, dadurch gekennzeichnet, daß beide Deckschichten Kopolyester in Form von Polykondensaten aus Terephthalsäure, Isophthalsäure und Ethylenglykol oder Butandiol sind.

3. Mehrschichtfolie nach Anspruch 1, dadurch gekennzeichnet, daß die eine Deckschicht ein Kopolyester und die andere Deckschicht ein polyolefinischer Siegelrohstoff aus $C_2$-, $C_2C_3$-, $C_3C_4$-, $C_2C_4$-, $C_2C_3C_4$- Rohstoffen oder Mischungen dieser Rohstoffe ist.

4. Mehrschichtfolie nach Anspruch 1, dadurch gekennzeichnet, daß die Basisschicht aus einem reinen Polypropylen-Homopolymer besteht, ausgerüstet mit Additiven wie Antistatika, Gleitmitteln und/oder Antiblockmitteln.

5. Mehrschichtfolie nach Anspruch 1, dadurch gekennzeichnet, daß der Basisschicht 10 - 30 Gew.-% Kohlenwasserstoffharz, bezogen auf das Gewicht der Basisschicht, zugesetzt sind.

6. Mehrschichtfolie nach den Ansprüchen 1 bis 5, dadurch gekennzeichnet, daß die Gesamtdicke der Mehrschichtverbundfolie 15 bis 60 μm, insbesondere 20 bis 40 μm beträgt.

7. Mehrschichtfolie nach Anspruch 6, dadurch gekennzeichnet, daß die Dicken der Deckschichten 0,2 bis 2 μm, insbesondere 0,5 bis 1,5 μm betragen.

8. Mehrschichtfolie nach Anspruch 1, dadurch gekennzeichnet, daß die Oberflächenspannung 36 bis 42 mN/m beträgt.

9. Verwendung einer Mehrschichtfolie nach den Ansprüchen 1 bis 8 als siegel-, bedruckbare und geruchlose Verpackungsfolie.

**Claims**

1. Biaxially oriented, co-extruded multilayer film with a polypropylene layer as the base layer, onto which top layers have been applied on one or both sides, characterised in that at least one top layer is a copolyester in the form of polycondensates of terephthalic acid, isophthalic acid and ethylene glycol or butanediol, has a surface tension of greater than or equal to 36 mN/m and is printable and heat-sealable without pretreatment by corona discharge.

2. Multilayer film according to Claim 1, characterised in that the two top layers are copolyesters in the form of polycondensates of terephthalic acid, isophthalic acid and ethylene glycol or butanediol.

3. Multilayer film according to Claim 1, characterised in that one top layer is a copolyester and the other top layer is a polyolefinic heat-sealable raw material comprising $C_2$-, $C_2C_3$-, $C_3C_4$-, $C_2C_4$- or $C_2C_3C_4$- raw materials or mixtures of these raw materials.

4. Multilayer film according to Claim 1, characterised in that the base layer comprises a pure polypropylene homopolymer, finished with additives such as antistatics, lubricants and/or antiblocking agents.

5. Multilayer film according to Claim 1, characterised in that 10-30% by weight of hydrocarbon resin, based on the weight of the base layer, has been added to the base layer.

6. Multilayer film according to Claims 1 to 5, characterized in that the total thickness of the multilayer composite film is from 15 to 60 μm, in particular from 20 to 40 μm.

7. Multilayer film according to Claim 6, characterised in that the thicknesses of the top layers are from 0.2 to 2 μm, in particular from 0.5 to 1.5 μm.

8. Multilayer film according to Claim 1, characterised in that the surface tension is from 36 to 42 mN/m.

9. Use of a multilayer film according to Claims 1 to 8 as a heat-sealable, printable and odourless packaging film.

**Revendications**

1. Feuille multicouche coextrudée, à orientation biaxiale, comportant une couche de polypropylène comme couche de base sur laquelle sont placées, d'un ou des deux côté(s), des couches de recouvrement, caractérisée en ce qu'au moins une couche de recouvrement est un copolyester sous forme de polycondensats d'acide téréphtalique, d'acide isophtalique et d'éthylèneglycol ou de butanediol, possède une tension superficielle supérieure ou égale à 36 mN/m et est imprimable et soudable sans traitement préalable au moyen d'une décharge par effet couronne.

2. Feuille multicouche selon la revendication 1, caractérisée en ce que les deux couches de recouvrement sont en copolyester sous forme de polycondensats d'acide téréphtalique, d'acide isophtalique et d'éthylèneglycol ou de butanediol.

3. Feuille multicouche selon la revendication 1, caractérisée en ce qu'une des couches de recouvrement est un copolyester et l'autre couche de recouvrement est un matériau de soudure polyoléfinique à base de matériau en $C_2$-, $C_2C_3$-, $C_2C_4$-, $C_3C_4$-, $C_2C_3C_4$- ou de mélanges de ces matériaux.

4. Feuille multicouche selon la revendication 1, caractérisée en ce que la couche de base consiste en un homopolymère de polypropylène pur, auquel sont adjoints des additifs tels qu'antistatiques, agents lubrifiants et/ou agents antiblocage.

5. Feuille multicouche selon la revendication 1, caractérisée en ce que, à la couche de base, sont ajoutés 10 à 30% en poids de résine hydrocarbonée, par rapport au poids de la couche de base.

6. Feuille multicouche selon les revendioations 1 à 5, caractérisée en ce que l'épaisseur totale de la feuille constituée de couches multiples est comprise entre 15 et 60 $\mu$m en particulier entre 20 et 40 $\mu$m.

7. Feuille multicouche selon la revendication 6. caractérisée en ce que les épaisseurs des couches de recouvrement sont comprises entre 0.2 et 2 $\mu$m, en particulier entre 0,5 et 1,5 $\mu$m.

8. Feuille multicouche selon la revendication 1, caractérisée en ce que la tension superficielle est comprise entre 36 et 42 mN/m.

9. Utilisation d'une feuille multicouche selon les revendications 1 à 8, comme feuille d'emballage soudable. imprimable et inodore.